Europäisches Patentamt

European Patent Office

Office européen des brevets

(11) Publication number : **0 509 729 A1**

## EUROPEAN PATENT APPLICATION

(21) Application number : **92303267.6**

(22) Date of filing : **13.04.92**

(51) Int. Cl.⁵ : **F16C 33/78**

(30) Priority : **19.04.91 GB 9108435**

(43) Date of publication of application :
**21.10.92 Bulletin 92/43**

(84) Designated Contracting States :
**BE DE DK ES FR GB IT NL SE**

(71) Applicant : **DOWTY SEALS LIMITED**
**Ashchurch**
**Tewkesbury Gloucestershire GL20 8JS (GB)**

(72) Inventor : **Everett, Richard Mervyn**
**Badger Bank, Buschcombe Lane**
**Woodmancote**
**Cheltenham, GloucestershireGL52 4OL (GB)**

(74) Representative : **Hogg, Jeffery Keith et al**
**Dowty Group Services Limited Arle Court**
**Cheltenham Gloucestershire, GL51 OTP (GB)**

(54) **Seal assembly.**

(57)    A seal assembly comprising inner and outer
members (1, 2) which are relatively rotatable
about a central axis, a carrier (5) which is
secured to one of these members, and a resilient sealing ring (8) which has a part crimped in
an annular channel (6) of the carrier and a
peripheral portion that is resiliently deformed
axially and engages the other of said members
in sealing face-to-face contact, characterised in
that the annular channel (6) is formed in the
carrier (5) so that it opens axially inwards of the
assembly, and said peripheral portion of the
sealing ring (8) is deformed axially outwards of
the assembly.

FIG.1.

## Technical Field

This invention relates to a seal assembly such as a rotary shaft seal.

Rotary shaft seals are commonly known in which an annular sealing element in the form of a flat sealing ring of resilient material is secured to a carrier at its outer edge and is flexed upon insertion over a shaft so as to take an arcuate shape and engage the shaft in face-to-face sealing contact towards the inner edge of the ring. The outer edge of the sealing ring is received in a channel in the carrier that opens radially inwards towards the shaft, and the carrier is crimped to partially close the channel and grip the sealing ring. The sealing ring extends radially inwards from the channel and longitudinally of the shaft to seal against the latter.

A consideration that often arises when designing seals is the need to accommodate them in a limited space available in a particular application. For example, ball-bearing seals may only have a limited axial space in which they can be accommodated. Also, it is desirable to reduce the production cost of such seals.

## Disclosure of the Invention

According to the present invention a seal assembly comprises inner and outer members which are relatively rotatable about a central axis, a carrier which is secured to one of these members, and a resilient sealing ring which has a part crimped in an annular channel of the carrier and a peripheral portion that is resiliently deformed axially and engages the other of said members in sealing face-to-face contact, and is characterised in that the annular channel is formed in the carrier so that it opens axially inwards of the assembly, and said peripheral portion of the sealing ring is deformed axially outwards of the assembly. Preferably, the peripheral portion of the sealing ring terminates within the axial width of the carrier. Preferably, the sealing ring lies wholly within the axial width of the carrier.

The use of an annular channel opening axially, allows the carrier to be produced by a die casting process which avoids the machining process that is normally employed to produce such channels and thereby reduces production costs.

## Description of the Drawings

The invention will now be described by way of example with reference to the accompanying drawings in which:

Figure 1 shows a part section of a ball-bearing fitted with an annular seal according to a first embodiment of the invention,

Figure 2 is a similar section to that of Figure 1, but shows a second embodiment of the invention,

Figure 3 shows the carrier of Figure 2 before assembly with the sealing ring,

Figure 4 is a similar section to that of Figure 1, but shows a third embodiment of the invention, and

Figure 5 is a similar section to that of Figure 1, but shows a fourth embodiment of the invention.

## Mode of Carrying Out the Invention

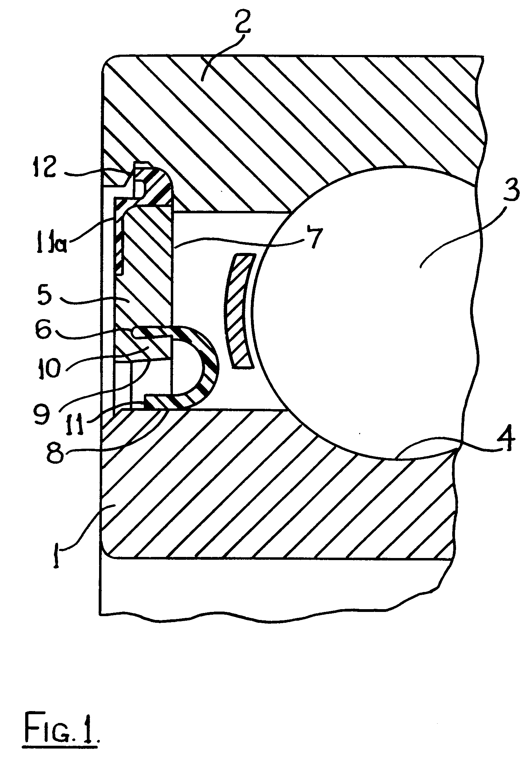

The ball-bearing illustrated in Figure 1 comprises an inner race 1 and an outer race 2 with a plurality of ball-bearings 3 located in the ball-track 4 formed between the two races 1, 2 so that the races are rotatable relative to one another about their concentric axis. An annular seal is provided between the two races 1, 2 so as to retain lubricating oil or grease within the ball-bearing.

The seal comprises an annular carrier 5 which is secured at its outer periphery to the outer race 2 so as to extend radially of the axis of the races 1, 2 across part of the gap therebetween. The carrier 5 is formed as a metal die casting with a concentric annular channel 6 formed in the axially directed inner face 7 so as to open laterally towards the ball-track 4. A sealing ring 8 formed from filled P.T.F.E. material has its outer edge inserted into the channel 6 and secured in place by crimping the carrier 5 to partially close the channel 6, this being achieved prior to assembly in the bearing by inserting a tapered crimping tool into the central aperture 9 of the carrier so as to deform the radially innermost lip portion 10 of the carrier outwards, as shown in the drawing.

The sealing ring 8 has its central aperture of smaller diameter than the outer diameter of the inner race 1 so that when inserted over the inner race, the sealing ring is deformed and folds back on itself with its inner free end in sealing face-to-face contact with the inner race 1. The free end is directed laterally away from the ball-track 4 and projects into the central aperture 9 of the carrier 5, but terminates within this aperture short of the adjacent end of the inner race 1.

In order to secure the carrier 5 to the outer race 2 and form a seal therewith, an annular sealing element 11 is preformed on the outer periphery of the carrier 5 by hot or cold preforming, and engages an annular recess 12 in the outer race 2.

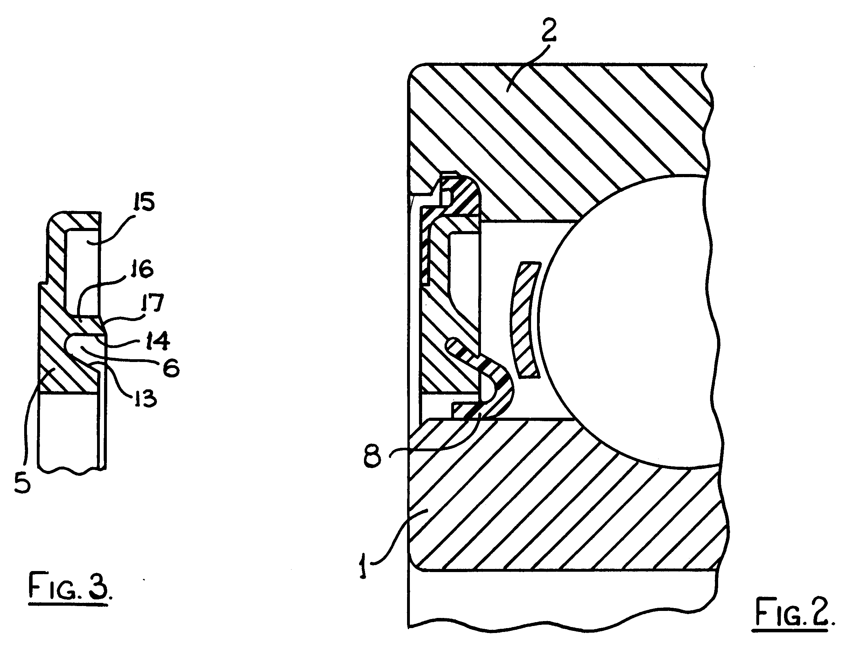

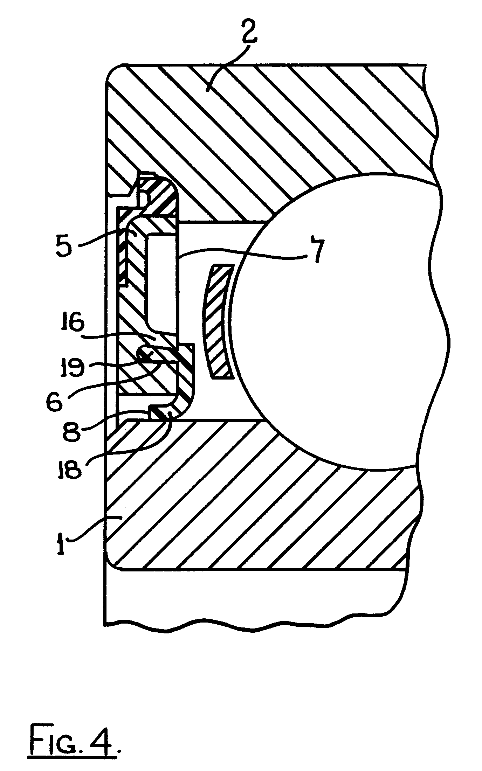

An alternative ball-bearing is illustrated in Figures 2 and 3 which is generally similar to that illustrated in Figure 1 and thus similar reference numerals have been used for equivalent parts. However, the carrier 5 is different in the manner in which the channel 6 has been formed in it and in which it is crimped to grip the sealing ring 8 therein. Whereas in Figure 1, the side walls of the channel 6 are substantially parallel and extend axially when formed, the side walls of the channel 6 in Figure 3 are formed so that the inner one 13 is inclined radially inwardly towards the inner face 7 to support the sealing ring 8 in a similarly inwardly inclined condition, as shown in Figure 2. The outer wall 14 of the channel 6 extends axially when formed but is deformed radially inwards to grip the sealing ring 8, as shown in Figure 2. To accommodate this crimping, the inner face 7 of the carrier 5 is recessed at 15 around the channel 6 so as to produce an annular lip portion 16 on which the outer wall 14 is formed. The axially directed end face 17 of this lip portion 16 is inclined to the bearing axis, as shown in Figure 2, so that a complementary shaped annular die axially engaging this end face 17 will produce a radially inwardly directed face that will deform the lip portion 16 inwardly and crimp the sealing ring 8 in the channel 6.

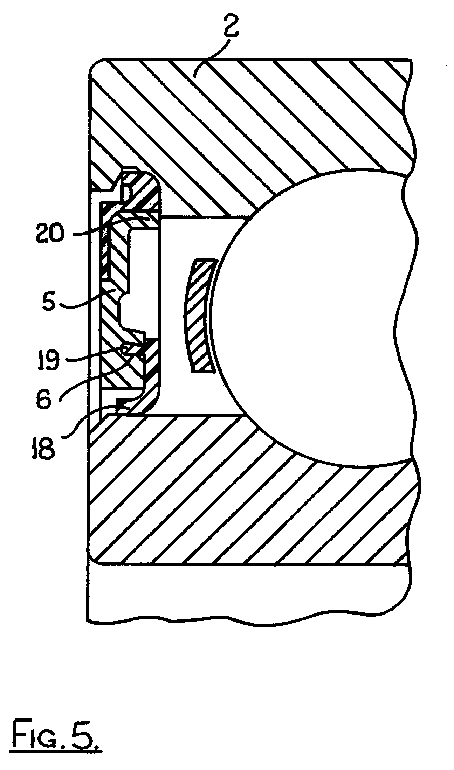

Another alternative ball-bearing is illustrated in Figure 4 which has a carrier similar to that of Figures 2 and 3 in that an annular outer lip portion 16 is deformed radially inwards to grip the sealing ring 8, although the channel has parallel axially extending walls. The sealing ring 8 is different in form, and instead of being a simple ring secured at one end, it comprises a preformed ring having a radially extending lip portion 18 that abuts the inner face 7 and seals with the inner race 1 at its inner periphery, and an axially outwardly extending attachment portion 19 formed at the outer edge of the lip portion 18 for engagement in the channel 6. As shown in Figure 4, the lip portion 18 abuts the inner face 7 of the carrier 5 and lies inwards of the inner axial boundary of the carrier 5. However, an alternative embodiment is illustrated in Figure 5 in which the carrier 5 has been adapted so that the lip portion 18 lies within the axial boundaries of the carrier, the outermost annular lip 20 of the carrier extending inwards beyond the lip portion 18.

## Claims

1. A seal assembly comprising inner and outer members (1, 2) which are relatively rotatable about a central axis, a carrier (5) which is secured to one of these members, and a resilient sealing ring (8) which has a part crimped in an annular channel (6) of the carrier and a peripheral portion that is resiliently deformed axially and engages the other of said members in sealing face-to-face contact, characterised in that the annular channel (6) is formed in the carrier (5) so that it opens axially inwards of the assembly, and said peripheral portion of the sealing ring (8) is deformed axially outwards of the assembly.

2. An assembly as claimed in claim 1 in which the peripheral portion of the sealing ring (8) terminates within the axial width of the carrier (5).

3. An assembly as claimed in claim 2 in which the sealing ring (8) lies wholly within the axial width of the carrier (5).

4. An assembly as claimed in any one of the preceding claims in which the sealing ring (8) is folded back on itself.

5. An assembly as claimed in any one of the preceding claims in which the sealing ring (8) is a simple ring with inner and outer edges with one of said edges inserted into the channel.

6. An assembly as claimed in any one of claims 1 to 4 in which the sealing ring (8) comprises a radially extending portion that abuts a radially extending surface of the carrier, and an axially extending attachment portion (19) integral with the radially extending portion and inserted into the channel.

7. An assembly as claimed in any one of the preceding claims in which the annular channel (6) is formed so that one side wall (13) thereof is inclined to the axis of the carrier and the opposite side wall (14) is formed in a portion of the carrier which is deformed during said crimping.

8. An assembly as claimed in claim 7 in which said one side wall (13) is that one radially nearer the axis of the carrier, and in which said portion (16) on which the opposite side wall (14) is formed is crimped radially inwards.

9. An assembly as claimed in any of claims 1 to 6 in which one side wall of the channel nearer the axis of the carrier is formed on a portion (10) of the carrier (5) which is deformed outwards during crimping.

10. An assembly as claimed in any one of the preceding claims, in which the carrier (5) is a die cast member.

11. An assembly as claimed in any one of the preceding claims in which the carrier (5) is an annular member secured to the outer member (2) and the peripheral portion of the sealing ring (8) extends axially into the aperture (9) of the annular carrier member (5).

12. An assembly comprising inner and outer members in the form of bearing races (1, 2) with the carrier (5) and sealing ring (8) therebetween as claimed in any one of the preceding claims.

FIG.1.

Fig. 2.

Fig. 3.

Fig.4.

FIG.5.

European Patent
Office

# EUROPEAN SEARCH REPORT

Application Number

EP    92 30 3267

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-U-8 018 794 (FICHTEL & SACHS AG) <br> * page 1 - page 4; figures 1-6 * <br> --- | 1,2,11 | F16C33/78 |
| A | FR-A-1 260 931 (R.K. WETZLAR GMBH) <br> * the whole document * <br> --- | 1 | |
| A | US-A-2 845 285 (L.D. COBB) <br> --- | | |
| A | US-A-3 090 628 (L. GIULIETTI) <br><br> ----- | | |
| | | | **TECHNICAL FIELDS SEARCHED (Int. Cl.5 )** |
| | | | F16C <br> F16J |

The present search report has been drawn up for all claims

| Place of search | Date of completion of the search | Examiner |
|---|---|---|
| BERLIN | 03 JUNE 1992 | HOFFMANN M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)